(19) Europäisches Patentamt
European Patent Office
Office européen des brevets

(11) **EP 2 140 249 B1**

(12) **EUROPEAN PATENT SPECIFICATION**

(45) Date of publication and mention
of the grant of the patent:
**14.09.2011 Bulletin 2011/37**

(51) Int Cl.:
***G01N 21/77*** *(2006.01)*    ***G01K 11/00*** *(2006.01)*

(21) Application number: **08736285.1**

(22) Date of filing: **16.04.2008**

(86) International application number:
**PCT/EP2008/054610**

(87) International publication number:
**WO 2008/125686 (23.10.2008 Gazette 2008/43)**

(54) **GAS SENSOR**

GASSENSOR

CAPTEUR DE GAZ

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **17.04.2007 GB 0707303**

(43) Date of publication of application:
**06.01.2010 Bulletin 2010/01**

(73) Proprietor: **Université de Mons
7000 Mons (BE)**

(72) Inventors:
• **CAUCHETEUR, Christophe
B-7000 Mons (BE)**

• **MEGRET, Patrice
B-7000 Mons (BE)**
• **DEBLIQUY, Marc
B-7000 Mons (BE)**
• **LAHEM, Driss
B-7000 Mons (BE)**

(74) Representative: **Larangé, Françoise
ARC-IP sprl
rue Emile Francqui, 4
1435 Mont-Saint-Guibert (BE)**

(56) References cited:
**GB-A- 2 192 710    GB-A- 2 230 855
JP-A- 3 152 446    US-A- 5 756 207**

**Description**

The present invention relates to sensors for gas detection and gas concentrations measurements; in particular, it relates to an optical fibre sensor for the measurement of gas concentrations in an oxidising atmosphere such as air.

Conventionally, the measurement of gas concentrations is possible using electrochemical cells, pellistors, semiconductor sensors or optical sensors.

Pellistors are punctual catalytic sensors. They are made of two coils of platinum: the sensing element and the compensation element. Both coils are covered with sintered ceramics; for the sensing element noble metal catalysts are added. When a combustible gas comes into contact with the gas sensor element, the gas is oxidised and the reaction generates heat, which leads to an increase of the temperature of the sensing platinum coil while no change of temperature occurs on the compensating element. The temperature rise is directly proportional to the concentration of the gas and, since the resistance value of the platinum wire is dependent on the temperature change, the gas concentration is measured by means of a simple Wheatstone bridge. The difference in potential between the sensor element (detector) and the compensation element (compensator) reflects the gas concentration.

Semiconductor sensors are made of a semiconductor sensitive film. When the sensitive film is in contact with a gas mixture, one or several gases of the mixture may adsorb on the surface of the film. When the interaction solid-adsorbed gas is sufficiently strong, electrons can be transferred, leading to a modification of the number of charge carriers (electrons and holes). The adsorbed gases act thus as surface doping agents and consequently modify the conductivity of the semiconductor material. Via the adsorption equilibria, there exists a link between the conductivity and the concentration of a given gas. Hence, measuring the conductivity of a semiconductor film allows the detection of a particular gas. When the adsorbed gases are electron receivers ($O_2$, $SO_2$ and $NO_2$ for example), an electronic transfer occurs from the film to the adsorbed molecules. The number of holes as well as the conductivity of the film increase for p-type semiconductors while, in the case of n-type semiconductors, the number of electrons and the conductivity of the film are decreased. Other gases such as $NH_3$, $H_2$ and CO act as electrons donors. In this case, the conductivity of n-type semiconductors increases while the conductivity of p-type semiconductors decreases. To increase the sensitivity of the semiconductor sensors, the semiconductor layer may show a porous structure or be deposited as a thin film.

Both pellistors and semiconductor sensors require electrical supply. Therefore, optical sensors are advantageously used in environments where electricity is prohibited. Optical sensors also have the great advantage of being miniaturised since an optical fibre is made of two concentric cylinders (the core in which the light is guided by total internal reflections surrounded by a cladding) with a total diameter of 125 microns. Optical fibre sensors are particularly interesting in comparison with other technologies such as pellistors or semiconductor sensors because they offer unique advantages such as immunity to electromagnetic interference, light weight, flexibility, stability, high temperature tolerance, and even durability against high radiation environments. A single optical fibre may also offer distributed or quasi-distributed sensing, which is not possible with pellistors and semiconductor sensors which provide punctual measurements.

Optical fibre sensors may be subdivided into extrinsic and intrinsic sensors. In extrinsic sensors, the optical fibre is used only to propagate light towards an external sensor. Inversely, intrinsic sensors make use of the optical fibre itself as sensing system. Intrinsic sensors may be used in various forms.

In one form, a sensitive material is deposited at the end of an optical fibre in which a monochromatic light is injected through a circulator. The signal reflected by the end of the fibre is monitored and reflects the gas concentration. Indeed, the sensitive layer is chosen in such a way that the gas to detect leads to a modification of its refractive index, a modification of the fluorescence spectrum or a modification of the polarisation of the reflected light. As for the pellistors and the semiconductor sensors, this kind of optical fibre sensors only allows punctual measurements.

In another form, the evanescent field associated to the light propagation into the optical fibre is used. The evanescent wave may couple light from the core to the cladding. Hence, if the cladding is locally removed and replaced by a sensitive layer able to absorb the energy of the evanescent field (evanescent absorption), to create fluorescence in the surrounding region of the core (evanescent excitation) or to couple fluorescence of the surrounding medium with the light transmitted by the fibre core (evanescent collection), one can detect a modification of the transmitted signal which can be linked to the gas concentration.

In a further form, a local modulation of the fibre core refractive index may be generated by an ultraviolet sensitisation in order to create a fibre grating.

Amongst fibre gratings, the most often used are called uniform fibre Bragg gratings (FBG) since the modulation of the fibre core is characterized by a constant periodicity. They act as selective mirrors in wavelength, reflecting some wavelengths around the Bragg wavelength defined by the following equation:

$$\lambda_{Bragg} = 2n_{eff}\Lambda$$

where $n_{eff}$ is the effective refractive index of the fibre core and $\Lambda$ is the periodicity of the refractive index modulation. These parameters are sensitive to external perturbations such as temperature and axial mechanical strain that affect the fibre containing the grating. The result is a shift, without modification of the shape, of the reflected and transmitted spectra. Hence, the information about the external perturbation is wavelength-encoded in the reflected and transmitted spectra. The order of magnitude of the Bragg wavelength shift in response to a change of temperature is 10 picometres per degree Celsius (pm/°C) around 1550 nm whereas the sensitivity to axial strain is of the order of 1 pm/$\mu\varepsilon$ (1 $\mu\varepsilon$ corresponds to an elongation of 1 $\mu$m of a 1 m long optical fibre). The response of fibre Bragg gratings to external perturbations is linear and without hysteresis. Wavelengths on either side of the Bragg wavelength are transmitted unmodified through the sensor. This property enables multiplexing of many sensors along a single optical fibre and gives birth to quasi-distributed sensing: the optical source and the receiver may be shared between all the sensor units.

Gas sensors using fibre Bragg gratings have been implemented by depositing a sensitive layer on the grating. The layer has the property to expand in presence of the gas to be detected, leading to an axial strain measured by the grating. For example, polyimide coatings have been used to measure humidity levels and palladium coatings have been used to detect hydrogen concentrations. However uniform fibre Bragg gratings covered with Pd have the disadvantage of a quite long response time leading to a hysteresis effect between the responses obtained for increasing and decreasing hydrogen concentrations. Furthermore, the behaviour of such sensors in oxidising (e.g. air) environments is not known since all previous studies showed results of experiments conducted in nitrogen environment and mainly dedicated to aerospace applications.

Other types of gratings exist: Long Period Bragg Gratings (LPG) or Tilted Bragg Gratings (TBG). Applicant is not aware of these gratings having been used for gas detection.

Long-period gratings are characterized by a periodicity of the core index modulation of the order of 500 $\mu$m whereas uniform fibre Bragg gratings have a periodicity of about 500 nm. They allow a strong coupling between the core mode and forward going cladding modes. As they propagate near the cladding-surrounding medium interface, they are very sensitive to the surrounding medium, allowing the use of long-period gratings as temperature, strain, curvature and refractive index sensors. Tilted short-period fibre gratings are characterized by a periodicity of the core index modulation similar to that of uniform fibre Bragg gratings. This modulation is tilted with respect to the fibre axis and consequently, the forward going core mode is coupled to both the backward going core mode and different backward going cladding modes.

GB2192710 proposes a gas sensor including an optical fibre coated with a catalyst capable of catalysing combustion of a combustible gas being sensed. This catalytic combustion causes a temperature change, generally a temperature rise. Such temperature change may be detected by any suitable means, for example by observing a change in the refractive index of the fibre.

GB2230855 discloses a thin film calorimeter comprising an optical fibre coated with a sorbant material. A fluid thermally interacts with the sorbant material, creating changes in the optical fibre produced by heat transferred thereto. The coated optical fibre is placed in a high vacuum chamber and, once used, must be replaced.

According to one of its aspects, the present invention provides a multi-use gas sensor as defined by claim 1. Dependent claims define preferred and/or alternative aspects of the invention.

This may provide advantageous properties including one or any combination of:

■ detection and concentration measurements of gas may be made in an oxidising atmosphere (e.g. $O_2$ atmosphere, air,...);
■ distributed or quasi-distributed sensing may be obtained (as opposed to a single point measurement);
■ sensor response is preferably linear and without any significant hysteresis;
■ sensor response may be selective and extremely fast (only a few seconds) for both increasing and decreasing gas concentrations;
■ sensitivity of the sensor is preferably better than with previous systems, consequently detection limit to the gas is reduced
■ very good sensitivity may be reached whatever the relative humidity level of the environment;
■ sensitivity may be sufficiently high that conventional low-cost measurement devices may be used as signal processing equipments;
■ reversibility of the reaction undergone by the reaction layer provides a multi-use gas sensor, i.e. a gas sensor which may be used again after one or more gas detection(s). After a gas detection, the reaction layer may oxidise itself again by contact with oxygen and become again adapted to generate a temperature change when brought in to contact with the gas to be sensed.

The temperature change may be an increase or decrease of temperature, i.e. the reaction layer may respectively undergo an exothermic or endothermic reaction. An exothermic reaction is preferred. Although the hereunder embodiments are described in relation to an exothermic reaction, it is evident that an endothermic reaction may instead be considered.

In one preferred embodiment, the temperature sensitive detection zone may comprise a plurality of spaced uniform fibre Bragg gratings (FBG) arranged along the optical fibre. Preferably, each spaced uniform fibre Bragg gratings is associated with, more preferably covered by, a reaction layer that undergoes an exothermic reaction in the presence of the gas to be sensed. This means that there may be a direct contact between the grating and the reaction layer, or not, provided that the heat generated by the exothermic reaction may still reach the grating. Alternatively, the reaction layer may cover substantially the whole external surface of the optical fibre. The rise of temperature, corresponding to the gas concentration in the atmosphere, is detected by the shift of the Bragg wavelength, when light is injected through the fibre comprising the gratings. This sensor arrangement may be used either in transmission or in reflection with an optical circulator. It allows quasi-distributed sensing and consequently, a better use of the optical source and the detector.

When using spaced uniform fibre Bragg gratings for the detection zone, it may be advantageous to provide the optical fibre with other slightly different uniform Bragg gratings (herein called "reference fibre Bragg gratings") separated by a few millimetres from the first ones. In this case, the first grating is covered by the reaction layer and works as gas sensor whereas the second grating is left uncoated and gives information about the external temperature. This may be used to measure external temperature and/or compensate for fluctuations in external temperature.

In an alternative embodiment of the sensor, preferably, the temperature sensitive detection zone, comprises a system adapted to activate the reaction layer, for example by outcoupling light from the fibre core to or towards the reaction layer, notably via the fibre cladding. For example, the detection zone may comprise Long-period gratings (LPG) or tilted short-period gratings (TBG). The order of magnitude of the wavelength shift of a long-period grating in response to a change of temperature is 10 times higher than in the case of uniform fibre Bragg gratings. Tilted short-period fibre gratings present similar temperature sensitivity as fibre Bragg gratings. When LPG or TBG gratings are associated with a reaction layer so as to be used as gas concentration sensors, they may exhibit a higher sensitivity in comparison with uniform fibre Bragg gratings and consequently be advantageous. They may be used to cause a light propagation into the cladding and/or into the reaction layer; may facilitate and/or enhance the reaction between the gas to be sensed and the reaction layer by supplying the or part of the necessary activation energy, for example by a photo-catalytic effect. This can improve the sensitivity and reduce the detection limit to the gas. In this embodiment, the reaction layer may preferably cover substantially (preferably more than 90%, more than 95% of the surface) the whole external surface of the optical fibre. Alternatively, uniform fibre Bragg gratings and long-period fibre gratings may be superimposed at same locations of the optical fibre. In such an embodiment, the LPG, which are radiating gratings, may couple the light from the fibre core to the reaction layer and favour the exothermic reaction; and the FBG may be used as a probe to sense the temperature variations by monitoring their central wavelength shift. Preferably, to benefit as much as possible from the light coupling, the FBG are written at the end of the LPG; this may increase the range of sensitivity of the sensor for low gas concentrations.

In still another embodiment, the temperature sensitive detection zone comprises a system based on Brillouin or Raman scattering. In that case, the reaction layer may preferably cover substantially the whole external surface of the optical fibre and gas sensing is made by an interrogation scheme based on the stimulated Brillouin scattering or the Raman scattering, e.g. light is sent into an optical fibre in which defects are present and for which the effect of the defects on the transmitted or reflected signal are known; a shift in the transmitted or reflected signal due to a temperature change at a zone comprising defects may be detected and used to locate the position of and/or the magnitude of the temperature change. Such systems require more complex signal processing equipments.

Preferably the reaction layer comprises a material which may provide an exothermic, preferably highly exothermic, and rapid reaction after having been brought in to contact with the gas to be sensed. Preferably the reaction layer is adapted to generate a temperature increase of at least 10°C, at least 20°C, at least 50°C, preferably at least 100°C, at least 200°C, at least 300°C in less than 30 seconds, preferably less than 20 seconds, more preferably less than 10 seconds, after having been brought in to contact with the gas to be sensed. This is preferably the temperature increase at the core of the optical fibre.

The reaction layer preferably comprises a ceramic comprising a metal oxide or a mixture of metal oxides, and a catalyst selected from the group consisting of catalytic metals (e.g. Pt, Pd, Au, Rh, Ru, Ag, Cu, Ni, Fe or Cr) and other metal oxides (e.g. $ZnO$, $MnO_2$, $Co_3O_4$, $Fe_2O_3$, $CuO$, $WO_3$, $V_2O_5$, $Cr_2O_3$, $Cr03$, $Cu_2O$, $TiO_2$, $Al_2O_3$, $SiO_2$ or zeolites). In the case of hydrogen sensing, preferably, the ceramic comprises tungsten oxide or vanadium oxide and the catalyst comprises one or more material selected from the group consisting of Pt, Pd, Au, Rh, Ru and Ni. Advantageously, the catalyst is present in a minor quantity compared to the ceramic in order to achieve a good dispersion of the catalyst on the ceramic.

The reaction layer may be deposited by various techniques including thermal vacuum deposition, sputtering, dip coating, sol-gel processing, chemical vapour deposition (which may be plasma enhanced) and Langmuir Blodgett deposition.

Advantageously, sensors according to the present invention may additionally comprise a material adapted to absorb wavelengths in the infrared region of the spectrum, e.g. CuO, NiO, carbon black. This absorbing material may be present in the reaction layer or alternatively, as a thin layer directly positioned under the reaction layer. This material may absorb energy of the light injected in the fibre thereby increasing its own temperature. This may allow to keep the reaction layer at sufficient temperature to initiate the reaction even if the outside temperature is low. This may be very useful for outdoor applications, e.g. monitoring of pipe lines in cold countries. The heating power, actually the light intensity in the fibre, may be modulated according to the temperature of the reaction layer (which is a measured signal anyway) to maintain it in a range adapted for the detection.

The sensor may be substantially non-reactive to gasses other that the gas which it is desired to detect. The sensor may be adapted to detect hydrogen in air; it may be substantially non-reactive to other gasses, for example hydrocarbon gasses and/or methane and/or pure nitrogen.

For the detection of $H_2$ in air, for example, we found it advantageous to use a reaction layer consisting essentially of $WO_3$ and Pt in an atomic ratio Pt/W of between 0.03 and 0.20, preferably between 0.05 and 0.10. When $WO_3$ and $H_2$ molecules are in close contact, the following chemical reactions occur:

$$WO_3 + H_2 \leftrightarrow WO_2 + H_2O$$

$$WO_2 + \tfrac{1}{2}\,O_2 \leftrightarrow WO_3$$

In air, the reaction of hydrogen oxidation produces water and is highly exothermic. The reaction between $WO_3$ and $H_2$ is very slow and requires a catalyst. When platinum is used as catalyst, the speed of the reaction increases considerably in such a way that the response time is less than a few seconds. Whereas platinum itself is a catalyst for direct oxidation of hydrogen in air, the dispersion of platinum (or other catalytic metals) on an oxide increases the reaction speed and is therefore more advantageous.

Here is a simplified overview of the functioning of a gas sensor according to the invention. When the gas to be detected is present in the oxidising atmosphere surrounding the sensor, this gas reacts with the reaction layer in a highly exothermic way. The reaction layer rapidly increases its temperature and irradiates this heat in its close environment. The temperature sensitive detection zone then is affected by this temperature increase and slightly changes, giving another "signature" (e.g. shift of the central wavelength of a fibre Bragg grating). Such changes may be detected by signal processing equipment, to provide information on the concentration values of the gas to be sensed and/or the position of the detection zone affected.

Preferably, gas sensors according to the present invention are adapted to sense a gas which is present in the surrounding atmosphere in a quantity of less than 1.5% or less than 1%, preferably less than 0.5% or less than 0.1%, more preferably less than 0.05%; this may be achieved with signal processing equipment which is neither complicated nor costly.

According to another of its aspects, the present invention provides an optical fibre as defined by claim 16.

Embodiments of the invention will now be further described, by way of example only, with reference to figures 1 to 4 and to an example.

Figure 1 is a diagram showing shifts of the central wavelength of a 3.5 cm long uniform fibre Bragg grating as a function of hydrogen concentration in air;

Figure 2 is a diagram showing the evolution of the transmission spectrum of a 3 cm long long-period grating as a function of hydrogen concentration in air;

Figure 3 is a diagram showing shifts of the central wavelength (around 1600 nm) of a 3 cm long long-period grating as a function of hydrogen concentration in air with different relative humidity levels;

Figure 4 is a simplified not to scale drawing showing an optical fibre with a reaction layer and fibre Bragg gratings.

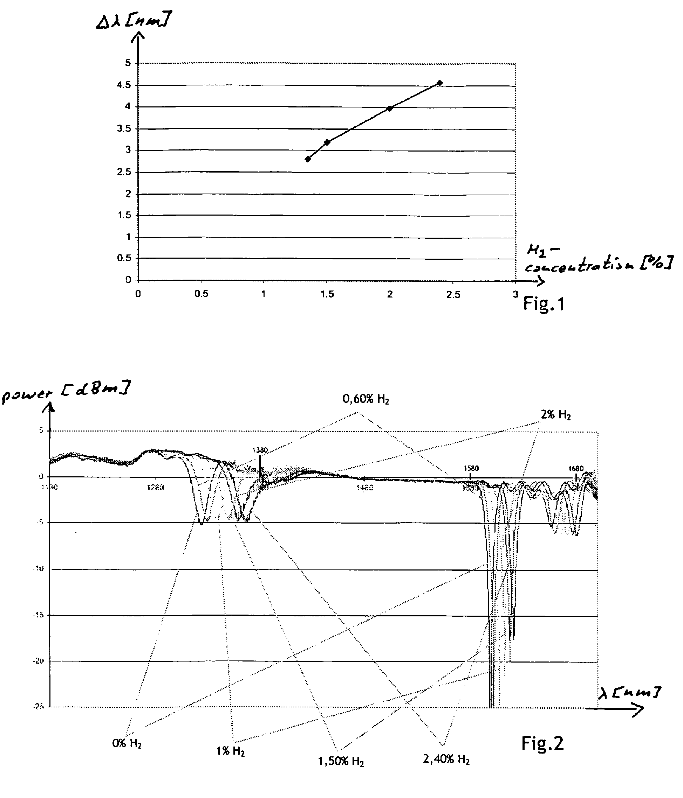

Figures 1 and 2 both relate to the detection of $H_2$ in air using a reaction layer consisting essentially of $WO_3$ and Pt.

Figure 1 shows results obtained with a uniform fibre Bragg grating whose physical length is 3.5 cm; it shows on the X axis the $H_2$ concentration in % and on the Y axis, the shifts of the central wavelength in nm. Several gratings with different physical lengths were tested; they exhibit the same sensitivity in response to hydrogen concentration. The resulting response is linear and without hysteresis. We have discovered that the chemical reaction occurs in the sensitive layer if a certain concentration threshold is reached. The threshold can be decreased by using strong fibre Bragg gratings (stronger gratings lead to a stronger coupling to the core mode and also to couplings to backward-going cladding modes) or a sufficiently powerful laser source.

Figure 2 shows the evolution of the transmission spectrum of a 3 cm long Long Period Bragg Grating when the fibre is in contact with hydrogen at various concentrations (in %) in air (for this example humidity is 50 % RH at 26°C).

X axis represents the wavelength in nm and Y axis represents the transmitted power through the fibre in dBm (the reference level is 1 mW). A clear shift of the transmission spectrum as the hydrogen concentration increases may be seen.

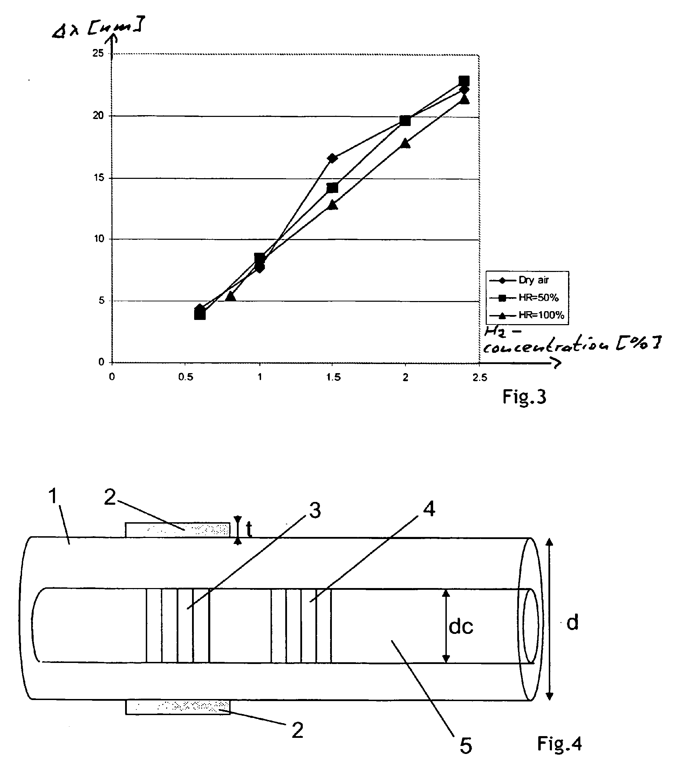

Figure 3 shows results obtained with a long-period grating whose physical length is 3 cm; X axis represents $H_2$ concentration in %, Y axis, the shifts of the central wavelength in nm and the different curves represent different relative humidity levels. Figure 3 shows the advantage of the energy outcoupling to the cladding and the reaction layer. Indeed, as they couple light to the cladding, long-period gratings coated with the reaction layer allow the decrease of the reaction threshold via a photo-catalytic effect. They also provide a higher sensitivity in comparison with uniform fibre Bragg gratings due to their larger sensitivity to temperature change (around 100 pm/°C for LPG instead of 10 pm/°C for FBG). For the detection of hydrogen, the presence of $WO_3$ which has a higher refractive index than $SiO_2$ allows a better optical coupling with the outside layer and allows that more energy should be available to initiate the reaction. The detection threshold in the present example was about 0.6 %. Figure 2 also shows results at different humidity levels, demonstrating that humidity does not affect the sensing properties of the sensor.

The frequency shift provoked by exposure to the gas to be detected may be greater than 1.5 nm per % concentration of gas to be detected; it may be greater that 25 nm, 50 nm, 70 nm or 80 nm per % concentration of gas to be detected.

The temperature rise provoked by exposure to the gas to be detected may be greater than 80°C, 100°C, 150°C or 180°C per % concentration of gas to be detected; this is preferably the temperature rise at the core of the optical fibre.

The temperature rise and/or frequency shift referred to above may be calculated as the average for a concentration of the gas to be detected of between 1% and 2%.

Preferably, sensors according to the present invention are adapted to function in relative humidity which may vary. For example, the sensors may be adapted to function at relative humidity between 0 and 80% or between 0 and 100%. At a 2% concentration of the gas to be detected, the variation in frequency shift provoked by a variation in humidity between 50% humidity and 100% humidity may be less than 20%, less than 15% and preferably less than 10%.

Figure 4 shows a singlemode optical fibre (1) of 125 $\mu$m diameter (d) with a reaction layer (2) of 1 $\mu$m thick (t) associated with a fibre Bragg grating (3) and an additional reference fibre Bragg grating (4) inscribed in the core (5) of around 8 $\mu$m diameter (dc).

Example

Nano-sized tungsten oxide powder was prepared using sol-gel method. To start, aqueous sol and gel of tungstic acid ($H_2WO_4$) were prepared from $Na_2WO_4$ with protonated cation-exchange resin. The nano-tungsten oxide in its hydrate form $WO_3.H_2O$ is finally obtained by repeatedly washing with distilled water and centrifuging of the gel. Appropriate amounts of hexachroloplatinum ($H_2PtCl_6$) solution (atomic ratio Pt/W of around 0.07) were added to synthesized $WO_3$ in order to obtain the reaction layer used for hydrogen detection. After annealing at 500°C during 2 hours, a powder consisting essentially of nanosized tungsten oxide lamellae is obtained. The platinum is dispersed on the surface of these lamellae.

3.5 cm long uniform fiber Bragg gratings were inscribed into hydrogen-loaded standard single mode fiber by means of a frequency-doubled Argon-ion laser emitting at 244 nm through a 1060 nm period uniform phase mask. A single sweep of the UV laser along the phase mask at a constant speed of 50 $\mu$m/s was used to inscribe the FBGs. For that purpose, we used an automated translation stage controlled by a computer and whose resolution in displacement is equal to 0.01 $\mu$m. A cylindrical lens was placed in front of the phase mask in order to increase the power density of the incident UV beam on the fiber. The mean optical power of the UV laser was kept constant and equal to 40 mW. Prior to the UV exposure, the optical fiber was hydrogen-loaded at 70°C and 200 atm during 48 hours. After the inscription, the gratings were annealed at 100°C during 24 hours in air in order to stabilize their properties. The uniform FBGs had a reflectivity greater than 90 %. The transmitted and/or reflected spectra of the manufactured FBG were monitored by means of an ASE source EXFO FLS2300B and an optical spectrum analyzer ANDO AQ6317C.

Prior to the deposition of the reaction layer, the optical fiber was cleaned. The reaction layer was then deposited, by using a dip-coating technique, on the stripped optical fiber at a place where an FBG was written. The powder of tungsten oxide doped with platinum was mixed with a solvent so that the optical fiber could be immersed into the solution. Then the solvent was evaporated at ambient temperature and the reaction layer remained fixed on the optical fiber. The thickness of the deposited layer was measured to be of the order of several microns.

For a 2% concentration of $H_2$ in dry air, the measured wavelength shift is equal to 4 nm. It is equivalent to an increase of temperature around the FBG of about 400°C since the temperature sensitivity of the FBG is of the order of 10 pm/°C. At room temperature, the response time is about 2s.

**Claims**

1. Multi-use gas sensor adapted for use in an oxidising atmosphere, comprising
an optical fibre (1) having a temperature sensitive detection zone (3) and
an associated reaction layer (2) associated with an external surface of the optical fibre (1) at at least one position along the fibre's length, **characterised in that**
the reaction layer (2) is adapted to generate a temperature change when brought in to contact with a gas to be sensed and comprises a ceramic comprising tungsten oxide or vanadium oxide, and a catalyst selected from the group consisting of catalytic metals and metal oxides and **in that** the temperature sensitive detection zone (3) comprises detection zone(s) selected from fibre Bragg gratings (FBG), Long Period Bragg Gratings (LPG) and Tilted Bragg Gratings (TBG).

2. Gas sensor according to claim 1, wherein the reaction layer (2) is adapted to generate heat when brought in to contact with the gas to be sensed.

3. Gas sensor according to claim 1 or claim 2, wherein the reaction layer (2) is adapted to generate a temperature rise of at least 100°C in less than 30 seconds after having been brought in to contact with the gas to be sensed.

4. Gas sensor according to any preceding claim, wherein the catalyst comprises one or more material selected from the group consisting of Pt, Pd, Au, Rh, Ru, Ag, Cu, Ni, Fe, Cr, ZnO, $MnO_2$, $Co_3O_4$, $Fe_2O_3$, $WO_3$, $V_2O_5$, $Cr_2O_3$, $CrO_3$, CuO, $Cu_2O$, $TiO_2$, $Al_2O_3$, $SiO_2$ and zeolites.

5. Gas sensor according to any preceding claim, wherein the reaction layer (2) consists essentially of $WO_3$ and Pt in an atomic ratio Pt/W of between 0.03 and 0.20.

6. Gas sensor according to any preceding claim, wherein the reaction layer (2) additionally comprises a material adapted to absorb wavelengths in the infrared region of the spectrum.

7. Gas sensor according to anyone of claims 1 to 5, wherein an additional layer is directly positioned under the reaction layer (2), said additional layer comprising a material adapted to absorb wavelengths in the infrared region of the spectrum.

8. Gas sensor according to any preceding claim, wherein the temperature sensitive detection zone comprises a plurality of spaced uniform fibre Bragg gratings (FBG) arranged along the optical fibre.

9. Gas sensor according to claim 8, wherein the reaction layer (2) is discontinuous and covers each spaced fibre Bragg grating.

10. Gas sensor according to claim 8 or 9, wherein at least one reference fibre Bragg grating is arranged along the optical fibre, the reference fibre Bragg grating being positioned adjacent to a Bragg grating, and wherein the reference fibre Bragg grating is not covered by the reaction layer.

11. Gas sensor according to any preceding claim, wherein the temperature sensitive detection zone is arranged to outcouple light from the fibre core to the fibre cladding.

12. Gas sensor according to claim 11, wherein the temperature sensitive detection zone comprises long-period gratings (LPG) or tilted short-period gratings (TBG) or a combination of long-period gratings (LPG) and uniform fibre Bragg gratings (FBG).

13. Gas sensor according to anyone of claims 1 to 8 or 11 to 12, wherein the reaction layer (2) is present on substantially the whole external surface of the optical fibre.

14. Gas sensor according to any preceding claim, further comprising signal processing equipment adapted to detect changes at the temperature sensitive detection zone and to provide an indication of the location and/or the concentration values of a gas to be sensed.

15. Gas sensor according to any preceding claim, adapted to sense a gas which is present in the surrounding atmosphere in a quantity of less than 1.5%.

16. Gas sensor according to any preceding claim, in which the gas sensor is a hydrogen gas sensor configured to detect hydrogen in air.

17. Optical fibre (1) having a temperature sensitive detection zone and an associated reaction layer (2) associated with an external surface of the optical fibre (1) at at least one position along the fibre's length, **characterised in that** the reaction layer is adapted to generate a temperature change by means of a reversible reaction when brought in to contact with a gas to be detected in the surrounding atmosphere and comprises a ceramic comprising tungsten oxide or vanadium oxide, and a catalyst selected from the group consisting of catalytic metals and metal oxides and **in that** temperature sensitive detection zone (3) comprises detection zone(s) selected from fibre Bragg gratings (FBG), Long Period Bragg Gratings (LPG) and Tilted Bragg Gratings (TBG).

**Patentansprüche**

1. Mehrzweckgassensor, der zur Verwendung in einer oxidierenden Atmosphäre angepasst ist, umfassend eine optische Faser (1), die einen temperaturempfindlichen Detektionsbereich (3) und eine assoziierte Reaktionsschicht (2), die an mindestens einer Position entlang der Faserlänge mit einer äußeren Oberfläche der optischen Faser (1) assoziiert ist, aufweist, **dadurch gekennzeichnet, dass** die Reaktionsschicht (2) angepasst ist, eine Temperaturänderung zu erzeugen, wenn sie mit einem nachzuweisenden Gas in Kontakt gebracht wird, und sie eine Keramik, umfassend Wolframoxid oder Vanadiumoxid, und einen Katalysator, ausgewählt aus der Gruppe, bestehend aus katalytischen Metallen und Metalloxiden, umfasst, und dass der temperaturempfindliche Detektionsbereich (3) (einen) Detektionsbereich(e), ausgewählt aus Faser-Bragg-Gittern (FBG), langperiodischen Bragg-Gittern (LPG) und gekippten Bragg-Gittern (TBG), umfasst.

2. Gassensor nach Anspruch 1, wobei die Reaktionsschicht (2) angepasst ist, Wärme zu erzeugen, wenn sie mit dem nachzuweisenden Gas in Kontakt gebracht wird.

3. Gassensor nach Anspruch 1 oder Anspruch 2, wobei die Reaktionsschicht (2) angepasst ist, eine Temperaturerhöhung von mindestens 100°C in weniger als 30 Sekunden zu erzeugen, nachdem sie mit dem nachzuweisenden Gas in Kontakt gebracht wurde.

4. Gassensor nach einem vorhergehenden Anspruch, wobei der Katalysator ein oder mehrere Material(ien), ausgewählt aus der Gruppe, bestehend aus Pt, Pd, Au, Rh, Ru, Ag, Cu, Ni, Fe, Cr, ZnO, $MnO_2$, $Co_3O_4$, $Fe_2O_3$, $WO_3$, $V_2O_5$, $Cr_2O_3$, $CrO_3$, CuO, $Cu_2O$, $TiO_2$, $Al_2O_3$, $SiO_2$ und Zeolithen, umfasst.

5. Gassensor nach einem vorhergehenden Anspruch, wobei die Reaktionsschicht (2) im Wesentlichen aus $WO_3$ und Pt in einem Atomverhältnis Pt/W von zwischen 0,03 und 0,20 besteht.

6. Gassensor nach einem vorhergehenden Anspruch, wobei die Reaktionsschicht (2) zusätzlich ein Material umfasst, das angepasst ist, Wellenlängen im Infrarotbereich des Spektrums zu absorbieren.

7. Gassensor nach einem der Ansprüche 1 bis 5, wobei eine zusätzliche Schicht direkt unter der Reaktionsschicht (2) angeordnet ist, wobei die zusätzliche Schicht ein Material umfasst, das angepasst ist, Wellenlängen im Infrarotbereich des Spektrums zu absorbieren.

8. Gassensor nach einem vorhergehenden Anspruch, wobei der temperaturempfindliche Detektionsbereich eine Vielzahl an in Abständen angeordneten einheitlichen Faser-Bragg-Gittern (FBG) umfasst, die entlang der optischen Faser angeordnet sind.

9. Gassensor nach Anspruch 8, wobei die Reaktionsschicht (2) diskontinuierlich ist und jedes der in Abständen angeordneten Faser-Bragg-Gitter bedeckt.

10. Gassensor nach Anspruch 8 oder 9, wobei mindestens ein Referenz-Faser-Bragg-Gitter entlang der optischen Faser angeordnet ist, wobei das Referenz-Faser-Bragg-Gitter neben einem Bragg-Gitter angeordnet ist und wobei das Referenz-Faser-Bragg-Gitter nicht von der Reaktionsschicht bedeckt ist.

11. Gassensor nach einem vorhergehenden Anspruch, wobei der temperaturempfindliche Detektionsbereich angeordnet ist, um Licht von dem Faserkern in den Fasermantel auszukoppeln.

**12.** Gassensor nach Anspruch 11, wobei der temperaturempfindliche Detektionsbereich langperiodische Gitter (LPG) oder gekippte kurzperiodische Gitter (TBG) oder eine Kombination aus langperiodischen Gittern (LPG) und einheitlichen Faser-Bragg-Gittern (TBG) umfasst.

**13.** Gassensor nach einem der Ansprüche 1 bis 8 oder 11 bis 12, wobei die Reaktionsschicht (2) im Wesentlichen auf der gesamten äußeren Oberfläche der optischen Faser vorhanden ist.

**14.** Gassensor nach einem vorhergehenden Anspruch, weiter umfassend eine Signalverarbeitungsvorrichtung, die angepasst ist, Änderungen an dem temperaturempfindlichen Detektionsbereich zu detektieren und eine Anzeige des Ortes und/oder der Konzentrationswerte eines nachzuweisenden Gases bereitzustellen.

**15.** Gassensor nach einem vorhergehenden Anspruch, der angepasst ist, ein Gas, welches in der umgebenden Atmosphäre in einer Quantität von weniger als 1,5% vorhanden ist, nachzuweisen.

**16.** Gassensor nach einem vorhergehenden Anspruch, in welchem der Gassensor ein Wasserstoffgassensor ist, der konfiguriert ist, Wasserstoff in Luft zu detektieren.

**17.** Optische Faser (1), die einen temperaturempfindlichen Detektionsbereich und eine assoziierte Reaktionsschicht (2), die an mindestens einer Position entlang der Faserlänge mit einer äußeren Oberfläche der optischen Faser (1) assoziiert ist, aufweist, **dadurch gekennzeichnet, dass** die Reaktionsschicht angepasst ist, anhand einer reversiblen Reaktion eine Temperaturänderung zu erzeugen, wenn sie mit einem in der umgebenden Atmosphäre nachzuweisenden Gas in Kontakt gebracht wird, und sie eine Keramik, umfassend Wolframoxid oder Vanadiumoxid, und einen Katalysator, ausgewählt aus der Gruppe, bestehend aus katalytischen Metallen und Metalloxiden, umfasst, und dass der temperaturempfindliche Detektionsbereich (3) (einen) Detektionsbereich(e), ausgewählt aus Faser-Bragg-Gittern (FBG), langperiodischen Bragg-Gittern (LPG) und gekippten Bragg-Gittern (TBG), umfasst.

## Revendications

**1.** Un capteur de gaz à usages multiples adapté pour être utilisé dans une atmosphère oxydante, comprenant une fibre optique (1) présentant une zone de détection sensible à la température (3) et une couche de réaction associée (2) associées à une surface externe de la fibre optique (1) à au moins une position le long de la longueur de la fibre, **caractérisé en ce que** la couche de réaction (2) est adaptée à générer un changement de température lorsqu'elle est mise en contact avec un gaz à détecter et comprend une céramique comprenant de l'oxyde de tungstène ou de l'oxyde de vanadium, et un catalyseur choisi parmi le groupe constitué de métaux catalytiques et d'oxydes métalliques et **en ce que** la zone de détection sensible à la température (3) comprend de(s) zone(s) de détection sélectionnée(s) parmi des réseaux de Bragg sur fibre (FBG), des réseaux de Bragg à longue période (LPG) et des réseaux de Bragg incliné (TBG).

**2.** Capteur de gaz selon la revendication 1, dans lequel la couche de réaction (2) est adaptée pour générer de la chaleur lorsqu'elle est mise en contact avec le gaz à détecter.

**3.** Capteur de gaz selon la revendication 1 ou la revendication 2, dans lequel la couche de réaction (2) est adaptée pour générer une augmentation de la température d'au moins 100 ° C en moins de 30 secondes après avoir été mis en contact avec le gaz à détecter.

**4.** Capteur de gaz selon l'une quelconque des revendications précédentes, dans lequel le catalyseur comprend un ou plusieurs matériaux choisi parmi le groupe constitué de Pt, Pd, Au, Rh, Ru, Ag, Cu, Ni, Fe, Cr, ZnO, $MnO_2$, $Co_3O_4$, $Fe_2O_3$, $WO_3$, $V_2O_5$, $Cr_2O_3$, $CrO_3$, CuO, $Cu_2O$, $TiO_2$, $Al_2O_3$, $SiO_2$ et de zéolithes.

**5.** Capteur de gaz selon l'une quelconque des revendications précédentes, dans lequel la couche de réaction (2) est constituée essentiellement de $WO_3$ et de Pt dans un rapport atomique Pt / W compris entre 0,03 et 0,20.

**6.** Capteur de gaz selon l'une quelconque des revendications précédentes, dans lequel la couche de réaction (2) comprend en outre un matériau conçu pour absorber des longueurs d'onde dans la région infrarouge du spectre.

**7.** Capteur de gaz selon l'une quelconque des revendications 1 à 5, dans lequel une couche supplémentaire est directement positionnée sous la couche de réaction (2), ladite couche additionnelle comprenant un matériel adapté pour absorber des longueurs d'onde dans la région infrarouge du spectre.

8. Capteur de gaz selon l'une quelconque des revendications précédentes, dans lequel la zone de détection sensible à la température comprend une pluralité de réseaux de Bragg sur fibre (FBG) uniformes et espacés et disposés le long de la fibre optique.

9. Capteur de gaz selon la revendication 8, dans lequel la couche de réaction (2) est discontinue et couvre chaque réseau de fibre de Bragg sur fibre espacé.

10. Capteur de gaz selon la revendication 8 ou 9, dans lequel au moins un réseau de Bragg de référence est disposé le long de la fibre optique, le réseau de Bragg de référence étant placé à côté d'un réseau de Bragg, et dans lequel le réseau de Bragg de référence n'est pas couvert par la couche de réaction.

11. Capteur de gaz selon l'une quelconque des revendications précédentes, dans lequel la zone de détection sensible à la température est disposée pour coupler la lumière du coeur de la fibre à la gaine de la fibre.

12. Capteur de gaz selon la revendication 11, dans lequel la zone de détection sensible à la température comprend des réseaux à longue période (GPL) ou des réseaux inclinés à courte période (TBG) ou une combinaison de réseaux à longue période (LPG) et réseaux de Bragg (FBG) uniformes.

13. Capteur de gaz selon l'une quelconque des revendications 1 à 8 ou 11 à 12, dans lequel la couche de réaction (2) est présente sur sensiblement toute la surface externe de la fibre optique.

14. Capteur de gaz selon l'une quelconque des revendications précédentes, comprenant en outre équipement de traitement de signaux adapté pour détecter des changements à la zone de détection sensible à la température et de fournir une indication de l'emplacement et / ou des valeurs de concentration d'un gaz à détecter.

15. Capteur de gaz selon l'une quelconque des revendications précédentes, conçu pour détecter un gaz qui est présent dans l'atmosphère environnante en une quantité inférieure à 1,5%.

16. Capteur de gaz selon l'une quelconque des revendications précédentes, dans lequel le capteur de gaz est un capteur de gaz hydrogène configuré pour détecter l'hydrogène dans l'air.

17. Fibre optique (1) présentant une zone de détection sensible à la température et une couche de réaction (2) associée, associées à une surface externe de la fibre optique (1) à au moins une position le long de la longueur de la fibre, **caractérisé en ce que** la couche de réaction est adaptée à générer un changement de température au moyen d'une réaction réversible lorsqu'elle est amenée à entrer en contact avec un gaz à détecter dans l'atmosphère environnante et comprend une céramique comprenant de l'oxyde de tungstène ou de l'oxyde de vanadium, et un catalyseur choisi parmi le groupe constitué de métaux catalytiques et d'oxydes métalliques et **en ce que** la zone de détection sensible à la température (3) comprend de(s) zone(s) de détection sélectionnée(s) parmi des réseaux de Bragg sur fibre (FBG), des réseaux de Bragg à longue période (LPG) et des réseaux de Bragg inclinés (TBG).

Fig.1

Fig.2

Δλ [nm]

Fig.3

Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2192710 A
- GB 2230855 A